(19)

Europäisches
Patentamt
European
Patent Office
Office européen
des brevets

(11) **EP 3 812 717 A1**

(12) **EUROPEAN PATENT APPLICATION**

(43) Date of publication:
**28.04.2021 Bulletin 2021/17**

(51) Int Cl.:
***G01H 11/08*** (2006.01)     ***G01N 29/24*** (2006.01)

(21) Application number: **20198646.0**

(22) Date of filing: **28.09.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **23.10.2019 IN 201921043154**

(71) Applicant: **Tata Consultancy Services Limited
Maharashtra (IN)**

(72) Inventors:
• **Sinharay, Arijit**
 **700160 Kolkata - West Bengal (IN)**
• **Khasnobish, Anwesha**
 **700160 Kolkata - West Bengal (IN)**
• **Rakshit, Raj**
 **700160 Kolkata - West Bengal (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR NON-CONTACT ULTRASOUND BASED VIBRATION DETECTION**

(57) This disclosure relates generally to method and system for non-contact ultrasound based vibration detection. Here, non-contact vibration detection plays crucial role in industries for monitoring and analyzing machine vibrations to predict early warnings of the potential failures. The method includes receiving, from a non-contact ultrasonic air transducer a signal reflected from a plurality of vibrating parts of a machine. The non-contact ultrasound obtains vibrational frequencies corresponding to the vibrating part of the machine which are further analyzed to determine an electrical impedance of a piezoelectric element. Further, based on the electrical impedance occurred vibrations are detected in each vibrating part from the plurality of vibrating parts of the machine. The measured impedance signal utilizes continuous sinusoidal excitation which enables narrow band filtering to increase signal to noise ratio. The proposed disclosure provides a low cost simple solution thereby reducing design complexity of the non-contact ultrasonic transducer circuit.

300

receiving, from a non-contact ultrasonic air transducer by one or more hardware processors, a signal reflected from a plurality of vibrating parts of a machine, wherein the signal is generated by the non-contact ultrasonic air transducer placed at a distance from the machine — 302

obtaining, a plurality of vibrational frequencies generated from the plurality of vibrating parts, wherein each vibrational frequency among the plurality of vibrational frequencies corresponds to a vibrating part from the plurality of vibrating parts of the machine — 304

analyzing, each vibrational frequency from the plurality of vibrational frequencies to determine an electrical impedance of a piezoelectric element of the non-contact ultrasonic air transducer, wherein the electrical impedance signal is determined based on a piezo resonance frequency excitation and an applied voltage to the non-contact ultrasonic air transducer — 306

detecting, vibrations occurred in each vibrating part from the plurality of vibrating parts based on the determined electrical impedance — 308

FIG.3

EP 3 812 717 A1

## Description

### CROSS-REFERENCE TO RELATED APPLICATIONS AND PRIORITY

The patent application claims priority to Indian patent application no. 201921043154, filed on October 23, 2019. The entire contents of the aforementioned application are incorporated herein by reference.

### TECHNICAL FIELD

The disclosure herein generally relates to vibration detection, and, more particularly, to method and system for non-contact ultrasound based vibration detection.

### BACKGROUND

In industrial applications, the uptime of machines can be enhanced through equipment monitoring. Specifically, heavy industries face major problems since different types of mechanical failures can originate from rotating machines. Since, all failure modes can cause an increase in machine vibrations, monitoring machine vibrations is the predominant and most widely used method to determine equipment conditions, and to predict failures. Non-contact vibration detection plays a crucial role in industries for monitoring and analyzing machine vibrations to predict early warnings of the potential failures since it does not require mounting any sensors on machines, which may not be feasible at all operating conditions of machines.

Traditionally, non-contact vibration detection utilizes standard continuous wave sonar radar configuration with one transmitter and one receiver in place that picks up the Doppler signal. Here, the system requires at least two amplifier circuits that includes one for the transmitter and another for the receiver. The alternative configuration is based on Time-of-Flight measurements that in addition of using dedicated amplifiers for transmitter and receiver, uses very sharp pulse that requires wideband receiver in receiver side making the system noise prone.

### SUMMARY

Embodiments of the present disclosure present technological improvements as solutions to one or more of the above-mentioned technical problems recognized by the inventors in conventional systems. For example, in one embodiment, a system for non-contact ultrasound based vibration detection is provided. The system includes a processor, an Input/output (I/O) interface and a memory coupled to the processor is capable of executing programmed instructions stored in the processor in the memory to receive from a non-contact ultrasonic air transducer (104), a signal reflected from a plurality of vibrating parts (106) of a machine (108), wherein the signal is generated by the non-contactultrasonic air transducer (104) placed at a distance from the machine (108). Further, a plurality of vibrational frequencies generated are obtained from the plurality of vibrating parts (106), wherein each vibrational frequency among the plurality of vibrational frequencies corresponds to a vibrating part from the plurality of vibrating parts (106) of the machine (108). Further, each vibrational frequency from the plurality of vibrational frequencies are analyzed by determining change in electrical impedance of a piezoelectric element of the non-contact ultrasonic air transducer, wherein the electrical impedance signal is determined based on a piezo resonance frequency excitation and an applied voltage to the non-contact ultrasonic air transducer. Furthermore, the vibrations occurred in each vibrating part from the plurality of vibrating parts (106) are detected based on the measurement of electrical impedance.

In another aspect, a method for non-contact ultrasound based vibration detection is provided. The method includes a processor, an Input/output (I/O) interface and a memory coupled to the processor is capable of executing programmed instructions stored in the processor in the memory for receiving from a non-contact ultrasonic airtransducer (104) by one or more hardware processors, a signal reflected from a plurality of vibrating parts (106) of a machine (108), wherein the signal is generated by the non-contact ultrasonic air transducer (104) placed at a distance from the machine (108). Further, a plurality of vibrational frequencies generated from the plurality of vibrating parts (106) are obtained, wherein each vibrational frequency among the plurality of vibrational frequencies corresponds to a vibrating part from the plurality of vibrating parts (106) of the machine (108). Further, each vibrational frequency from the plurality of vibrational frequencies are analyzed by determining change in electrical impedance of a piezoelectric element of the non-contact ultrasonic air transducer, wherein the electrical impedance signal is determined based on a piezo resonance frequency excitation and an applied voltage to the non-contact ultrasonic air transducer. Furthermore, the vibrations occurred in each vibrating part from the plurality of vibrating parts (106) are detected based on the measurement of electrical impedance.

In yet another aspect, provides one or more non-transitory machine-readable information storage mediums comprising one or more instructions, which when executed by oneormore hardware processors perform actions includes to receive from a non-contact ultrasonic air transducer (104), a signal reflected from a plurality of vibrating parts (106) of a machine (108), wherein the signal is generated by the non-contact ultrasonic air transducer (104) placed at a distance from the machine (108). Further, a plurality of vibrational frequencies generated are obtained from the plurality of vibrating parts (106), wherein each vibrational frequency among the plurality of vibrational frequencies corresponds to a vibrating part from the plurality of vibrating parts (106) of the machine (108). Further, each vibrational frequency from the plurality of vibrational frequencies are analyzed by determining change in electrical impedance of a piezoelectric element of the non-contact ultrasonic air transducer, wherein the electrical impedance signal is determined based on a piezo resonance frequency excitation and an applied voltage to the non-contact ultrasonic air transducer. Furthermore, the vibrations occurred in each vibrating part from the plurality of vibrating parts (106) are detected based on the measurement of electrical impedance.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG.1 illustrates an example system implemented for detecting vibrations from distinct parts of a machine using non-contact ultrasonic transducer, in accordance with an embodiment of the present disclosure.
FIG.2 illustrates a functional block diagram of the system of FIG. 1, according with some embodiments of the present disclosure.
FIG. 3 illustrates a flow diagram of a method for detecting vibrations of each vibrating part using non-contact ultrasound using the system of FIG.1, in accordance with some embodiments of the present disclosure.
FIG.4A illustrates an example for detecting vibrations from each vibrating part using non-contact ultrasound using the system of FIG.1, in accordance with some embodiments of the present disclosure.
FIG.4B is an equivalent RLC circuit representation of piezoelectric element of non-contact ultrasonic transducer using the system of FIG. 1, in accordance with some embodiments of the present disclosure.
FIG.4C and FIG.4D represents electrical circuits for measuring impedance from each vibrational frequencies of the piezoelectric element of non-contact ultrasonic transducer using the system FIG.1, in accordance with some embodiments of the present disclosure.
FIG. 5A, illustrates a frequency response plot of piezoelectric element for measuring the impedance from each vibrational frequencies to detect the vibrations using the system FIG.1, in accordance with some embodiments of the present disclosure.
FIG. 5B and FIG.5C, illustrates the plot of frequencies at 42.04 kHz, 65 Hz using the system FIG.1, in accordance with some embodiments of the present disclosure.
FIG. 6A illustrates plot of the FFT signal for the frequency of FIG.5C comparing the ultrasound signals with the accelerometer signals, in accordance with some embodiments of the present disclosure.
FIG. 6B illustrates plot of the FFT signal of dual frequency at (50 Hz and 60 Hz) excitation from ultrasound signals in comparison with accelerometer signals, in accordance with some embodiments of the present disclosure.
FIG. 6C illustrates vibrations detected using spectrogram when swept linearly from 40 Hz to 54Hz using a piezoelectric ultrasonic transducer, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

The embodiments herein provides a method and system for non-contact ultrasound based vibration detection. The system may be configured for detecting vibrations from a plurality of vibrating parts of a machine or vibrating surface of the environment. The term ultrasound may be alternatively referred as ultrasonic transducer. Further, the proposed system provides a mechanism to detect vibrations of the corresponding vibrating part among the plurality of vibrating parts of the machine to be inspected with a low cost simple solution by reducing design complexity of the non-contact ultrasonic transducer circuit. The proposed disclosure utilizes single ultrasound transducer with continuous wave excitation which requires less number of amplifiers resulting in good signal to noise ratio. The proposed technique uses a single non-contact ultrasonic transducer for measuring the electrical impedance from a plurality of vibrational frequencies to detect the vibrations occurred for the inspected machine. However, this method is capable to detecting vibrations remotely from any vibrating part of the machine. The disclosed method provides accuracy more than 99% which thereby increases the efficiency of the machine being inspected. This simplified design measures the electrical impedance of the piezo-electric material that yields over 99.05±0.08% accuracy in detecting spectral components when compared with a contact based accelerometer.

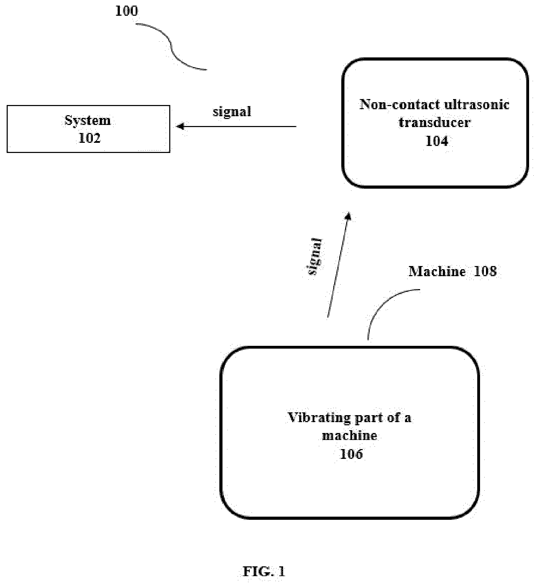

Referring now to the drawings, and more particularly to FIG. 1 through 6C, where similar reference characters denote corresponding features consistently throughout the figures, there are shown preferred embodiments and these embodiments are described in the context of the following exemplary system and/or method. FIG.1 illustrates an example system implemented for detecting vibrations from distinct parts of a machine using non-contact ultrasonic transducer, in accordance with an embodiment of the present disclosure. The system includes a machine 108 comprising a plurality of vibrating parts of a machine and a non-contact ultrasound for fetching vibrating signals which are then analysed for detecting the vibrations occurred while inspecting the machine. The present disclosure by considering a machine having a plurality of vibrating parts for detecting the plurality of vibrational frequencies for fault monitoring.

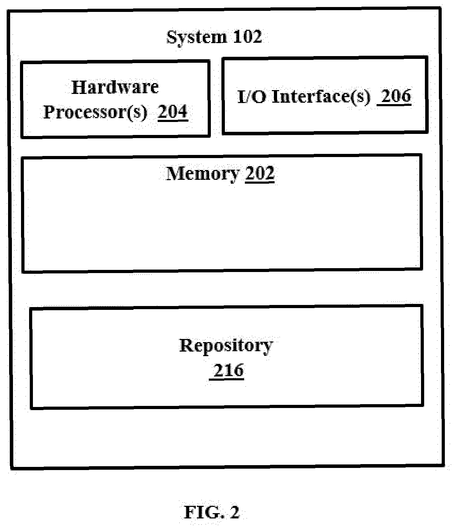

FIG.2 illustrates a functional block diagram of the system of FIG.1, in accordance with some embodiments of the present disclosure. In an embodiment, the system 102 includes processor (s) 204, communication interface device(s), alternatively referred as or input/output (I/O) interface(s) 206, and one or more data storage devices or memory 202 operatively coupled to the processor (s) 204. The processor (s) 204 may be alternatively referred as one or more hardware processors or simply processor (204). In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) 204 is configured to fetch and execute computer-readable instructions stored in the memory. In an embodiment, the system 102 can be implemented in a variety of computing systems, such as laptop computers, notebooks, hand-held devices, workstations, mainframe computers, servers, a network cloud and the like.

The I/O interface(s) 206 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for receiving the video stream. The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 202, may include a modules 208.The memory 202 may further comprise information pertaining to input(s)/output(s) of each step performed by the system 102 and methods of the present disclosure. The repository 216 may be external to the system 102 or internal to the system 102 (as shown in FIG.1). The repository 216, coupled to the system 102, may store the plurality of vibrational frequencies captured using non-contact ultrasonic transducer for detecting vibrations.

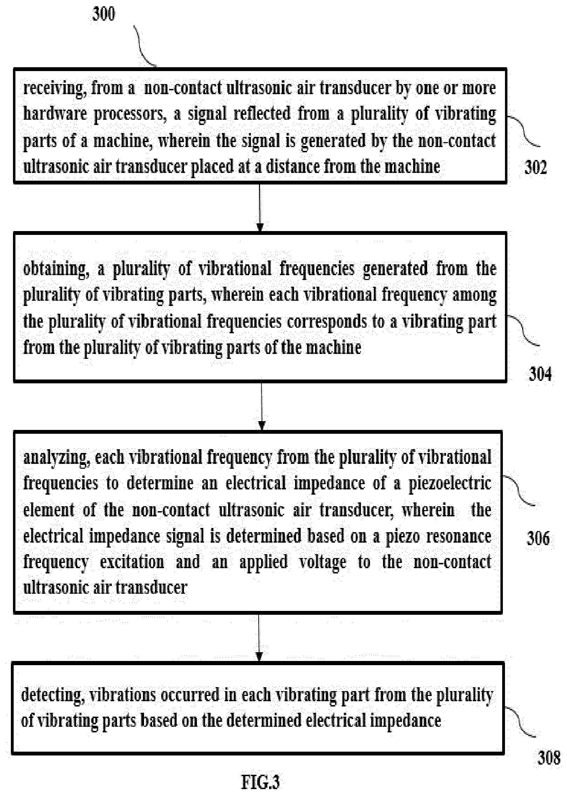

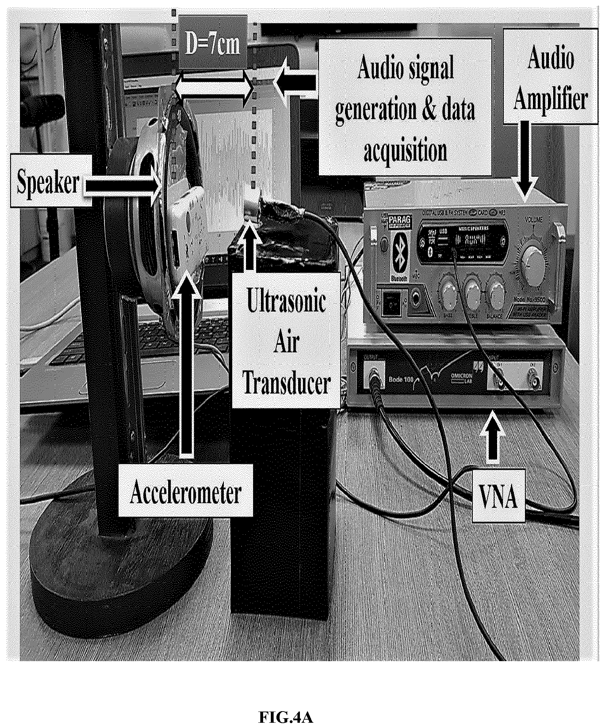

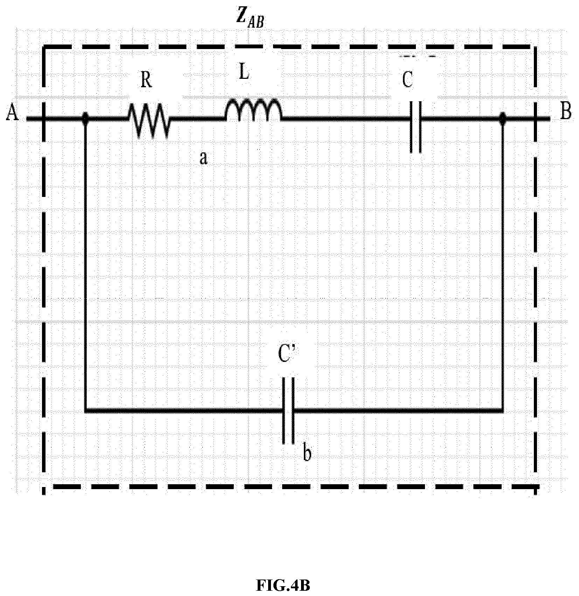

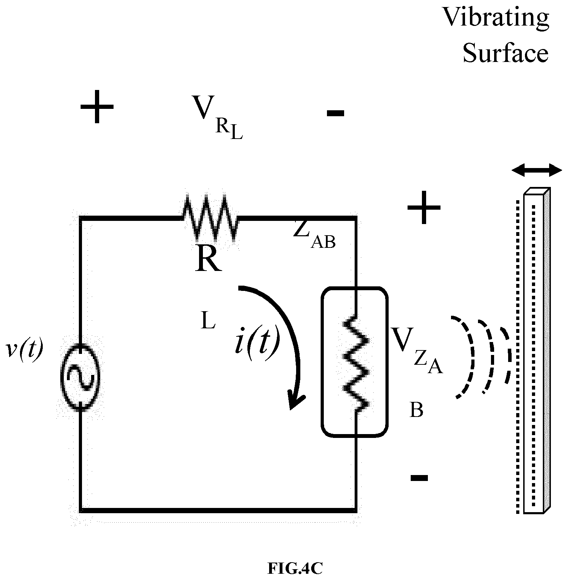

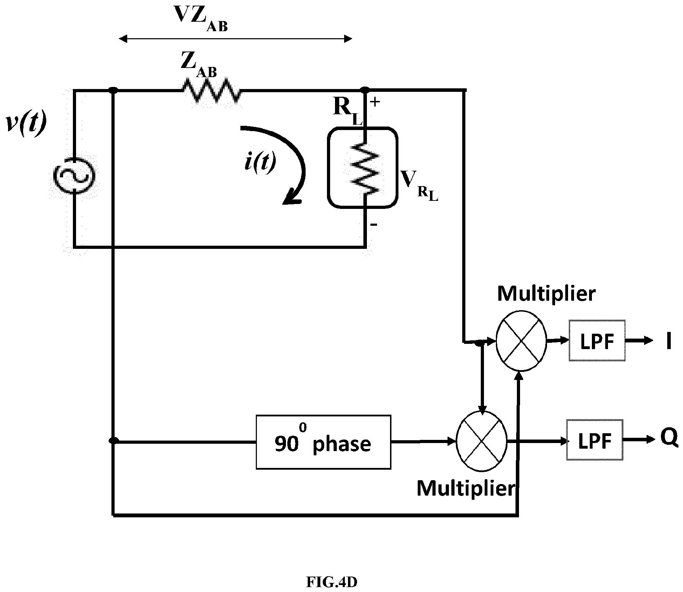

FIG. 3 illustrates a flow diagram of a method for detecting vibrations of each vibrating part using non-contact ultrasound using the system of FIG.1, in accordance with some embodiments of the present disclosure. The steps of the method 300 of the flow diagram will now be explained with reference to the components or blocks of the system 102 in conjunction with the example architecture of the system as depicted in FIG.4A through FIG.4D. Here, FIG.4A illustrates an example for detecting vibrations from each vibrating part using non-contact ultrasound using the system. FIG.4B is an equivalent RLC circuit representation of piezoelectric element of non-contact ultrasonic transducer using the system and FIG. 4C and FIG.4D represents an electrical circuit for measuring impedance from each vibrational frequencies of the piezoelectric element of non-contact ultrasonic transducer using the system FIG.1. In an embodiment, the system 102 comprises one or more data storage devices or the memory 202 operatively coupled to the one or more processors 204 and is configured to store instructions for execution of steps of the method 300 by the one or more processors 204. Although process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 302 of the method 300, the processor 204 is configured to receive, from a non-contact ultrasonic air transducer (104) by one or more hardware processors, a signal reflected from a plurality of vibrating parts (106) of a machine (108), wherein the signal is generated by the non-contactultrasonic air transducer (104) placed at a distance from the machine. The non-contact ultrasonic air transducer is placed remotely in distant from the plurality of vibrating parts of the machine in the vibrating surface being inspected for monitoring the faults based on the detected vibrations. The present disclosureis further explained by considering a machine having a plurality of vibrating parts for detecting the plurality of vibrational frequencies for fault monitoring. A single ultrasonic air transducer is used for non-contact vibration detection which uses continuous wave excitation resulting in high Signal -to-Noise ratio (SNR). A single non-contactultrasonic air transducer is used for capturing the plurality of vibrational frequencies and their corresponding relative amplitudes in real time for detecting vibrations from a plurality of vibrating parts of the machine based on the change occurred in the impedance signal.

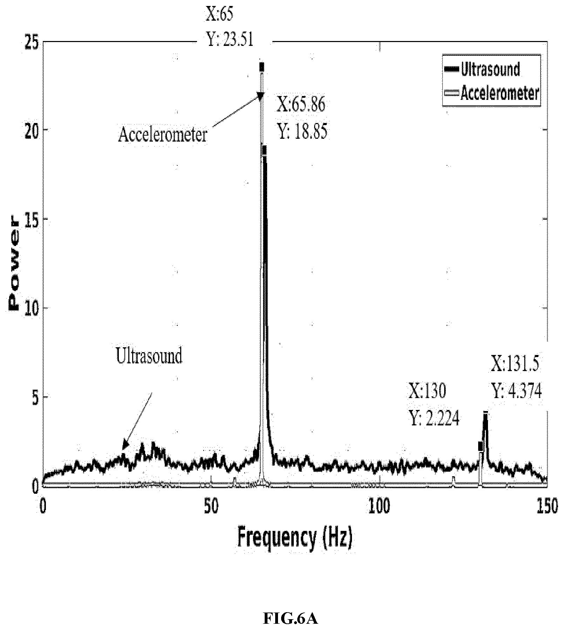

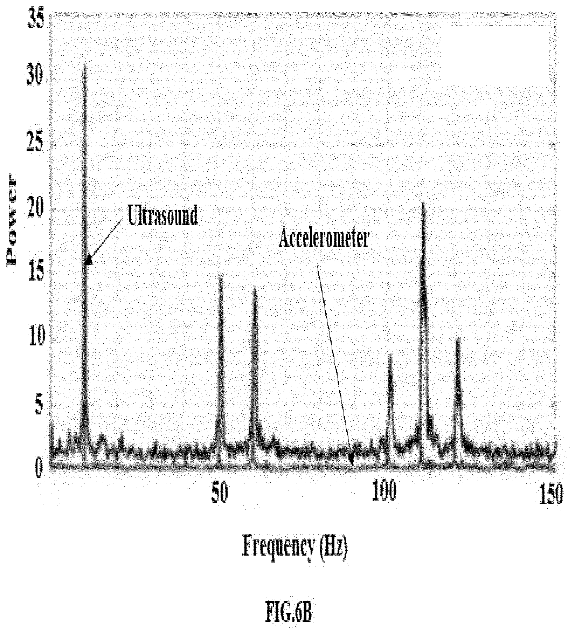

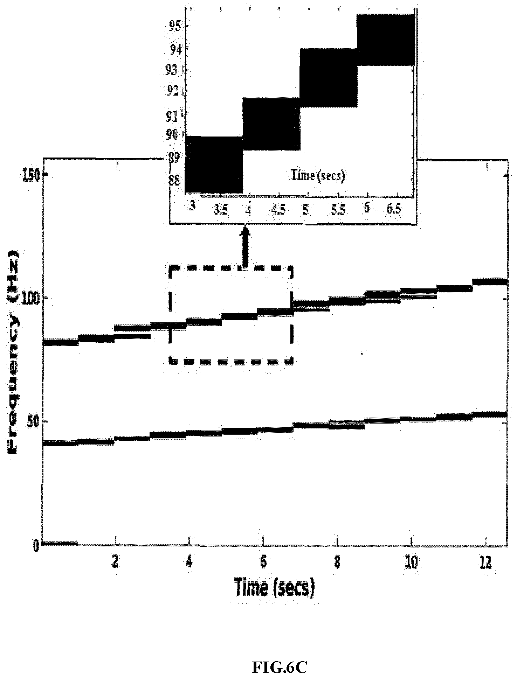

At step 304 of the method 300, the processor 204 is configured to obtain, a plurality of vibrational frequencies generated from the plurality of vibrating parts (106), wherein each vibrational frequency among the plurality of vibrational frequencies corresponds to a vibrating part from the plurality of vibrating parts (106) of the machine (108). Referring now to Fig. 4A which depicts an example where the faults of the machine is monitored by detecting the vibrations from the plurality of vibrational frequencies. The experimental setup consists of a vibrating surface and a remote ultrasonic transducer for the machine being inspected. The vibration of a vibrating part among the plurality of vibrating parts for a particular frequency is obtained through a speaker connected via audio amplifier. The diaphragm of the speaker mechanically vibrates at the excitation frequencies and serves as a vibrating object. The piezoelectric ultrasonic air transducer is placed about 7 cm distant from the speaker to detect the mechanical vibrations of the diaphragm. Additionally, an accelerometer is connected to the diaphragm of the speaker to obtain the vibrations of the same which serve as a ground truth which is further explained using FIG.6A, FIG.6B and FIG.6C which is depicted further in the proposed disclosure. Here, 40 kHz ultrasonic piezo electric element is applied at its resonance frequency of 42.04 kHz with a 1.5V sinusoid voltage and its change in impedance is measured and recorded by the VNA (Bode 100).

At step 306 of the method 300, the processor 204 is configured to analyze, each vibrational frequency from the plurality of vibrational frequencies to determine an electrical impedance of a piezoelectric element of the non-contact ultrasonic air transducer, wherein the electrical impedance signal is determined based on a piezo resonance frequency excitation and an applied voltage to the non-contact ultrasonic air transducer. The vibrations occurred in each vibrating part are detected based on the change occurred in the magnitude of electrical impedance. Referring, now to FIG.4B, the depicted above example the ultrasonic air transducer uses a piezo electric element where the equivalent RLC circuit representation of piezoelectric element of non-contact ultrasonic transducer represented. The piezoelectric element yields mechanical vibrations if an oscillating voltage is applied across it. Similarly, if piezo electric element is subjected to mechanical vibrations, it generates oscillating voltage across it. Mathematically, any piezo electrical element can be modeled by an RLC network with a capacitance ($C'$) positioned in parallel to the series resistance (R), inductance (L) and capacitance (C). This stems from the fact that any simple harmonic motion can be modeled as an RLC circuit. The net impedance ($Z_{AB}$) of a piezo electric element can be represented as mentioned below in equation 1,

$$Z_{AB} = \left(R + j\omega L + \frac{1}{j\omega C}\right) \| \ \frac{1}{j\omega C'} \ \text{-------------------- equation 1}$$

At step 308 of the method 300, the processor 104 is configuredto detect, vibrations occurred in each vibrating part from the plurality of vibrating parts based on the determined electrical impedance. Referring now to FIG4C, which represents an electrical circuit for measuring the impedance from each vibrational frequency among the plurality of vibrational frequencies corresponds to a vibrating part captured using the piezoelectric element of non-contact ultrasonic transducer. The vibrations occurred in each vibrating part are detected based on the change occurred in the phase of electrical impedance. The electrical impedance is measured by connecting the piezo electric element ($Z_{AB}$) in series with a known resistance ($R_L$) and thereby measuring the voltage drop ($V_{R_L}$) across. Mathematically representing the piezo electric element $|Z_{AB}|$ is represented as equation 2,

$$|Z_{AB}(t)| = \frac{|V_{Z_{AB}}|}{|i(t)|} = \frac{|v(t)-v_{R_L}|}{|i(t)|} = \frac{|v(t)-v_{R_L}|}{|v_{R_L}|} * R_L \ \text{---------------- equation 2}$$

Where, $|i(t)| = \frac{|V_{R_L}|}{|i(t)|}$. Since, $v(t)$ excitation level, $V_{R_L}$ is measured and $R_L$ are all known resistances. $\Delta Z_{AB}$ can be calculated from equation 2. The electrical impedance is obtained using the excitation voltage using piezo electric element of the non-contact ultrasonic transducer, connected to a known load resistance in series, at its resonance frequency with a sinusoidal voltage signal. Further, the voltage drop is measured across the known load resistance using lock-in detection principle. The impedance magnitude of the piezoelectric element of the non-contact ultrasonic transducer is measured using the excitation voltage, value of the known load resistance and the value of the voltage drop across the load resistance. Thus, vibrations can be remotely detected by monitoring change in the impedance signal for each vibrating frequency among the plurality of vibrational frequencies. The change in impedance due to non-contact ultrasonic transducer is quite small, and so $V_{R_L}$ needs to be measured accurately. Referring now to FIG.4D, Bode 100 uses the same principle to measure unknown impedance by internally measuring the voltage drop $V_{R_L}$ across a $R_L$**=50** Ω **resistance** by taking phase sensitive measurements for precise and highly accurate measurements. For phase sensitive measurement, $V_{R_L}$ signal is multiplied with reference excitation and low pass filtered to produce in-phase signal I. Similarly, $V_{R_L}$ is multiplied by 90 degree phase shifted sinusoid (relative to the excitation signal) and low pass filtered to produce quadrature signal Q. Then I and Q are combined through equation 1 and 2 to get precise value of $V_{R_L}$.

Where,

$$V_{R_L} = \sqrt{I^2 + R^2} \quad \text{------------equation 3}$$

The measured impedance signal by equation 2 utilizes continuous sinusoidal excitation which enables narrowband filtering through phase sensitive sensing to increase signal to noise ratio by taking precise value of $V_{R_L}$.

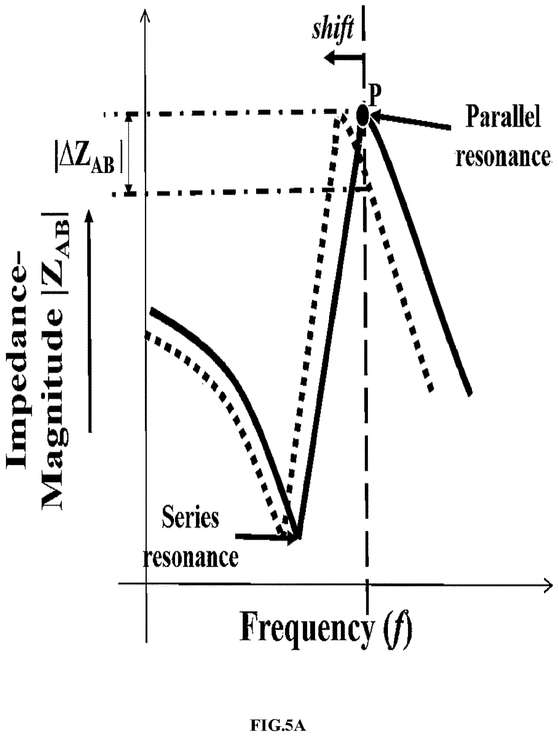

Referring now to FIG. 5A which illustrates a frequency response plot of piezoelectric element for measuring the impedance from each vibrational frequencies to detect the vibrations using the system FIG. 1, in accordance with some embodiments of the present disclosure. The plot represents the frequency response with impedance magnitude vs frequency plot of piezo electric element of the ultrasonic transducer. The first trough occurs when series resonance occurs in the arm 'a' of *AB* which is the reactance of L and C becomes exactly opposite atthis frequency. The peak occurs when parallel resonance occurs which is the reactance of L and *C'* compensates each other at this frequency in 'a' and 'b' in AB. If the piezo electric element is driven at its resonance at point P and if L and C values are altered then the resonance curve will shift and there will be a change in the impedance magnitude ($|\Delta Z_{AB}|$). This change happens if the piezo electric element is subjected to an external loading. For example, the mechanical vibration from the propelling pressure waves in air to the ultrasonic air transducer loads the piezoelectric element inside and modulates its impedance proportional to the vibrational frequency. The analysis of impedance signal provides information about source vibration with the frequency components.

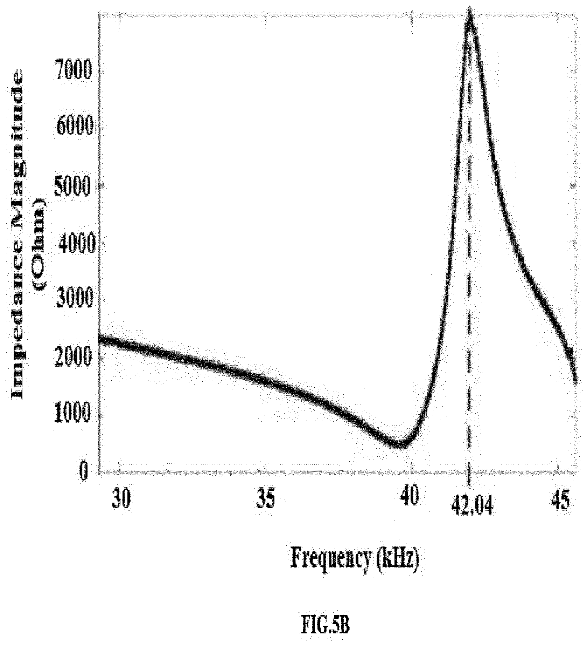

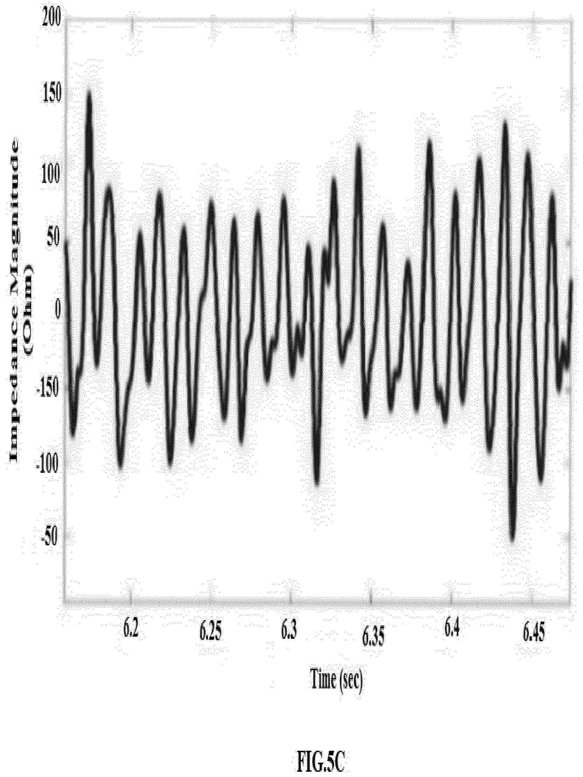

FIG. 5B and FIG.5C, illustrates the plot of frequencies at 42.04 kHz, 65 Hz using the system FIG.1, in accordance with some embodiments of the present disclosure. The experimental results validates non-contact vibration detection using single ultrasonic piezo through impedance measurement. The frequency response of the piezoelectric element obtained using one-port impedance measurement by Bode100. A sharp resonance is observed at 42.04 kHz for the non-contact air-couple transducer is excited at 42.04 kHz. The system has been experimented for three different vibrational frequencies generated on the speaker as a single tone, a dual tone which has multi-frequency and the tones with a frequency sweep.

FIG. 6A illustrates plot of the FFT signal for the frequency of FIG.4C comparing the ultrasound signals with the accelerometer signals, in accordance with some embodiments of the present disclosure. The detection of single frequency tone with ultrasonic piezo electric element where 65Hz tone is generated on the speaker. The change in impedance magnitude of the piezoelectric element in time domain is shown as plotted in the graph representing ultrasound signal. The fast Fourier transform (FFT) of the same is shown as plotted in the graph representing accelerometer. The accelerometer data obtained is analyzed which serves as the ground truth. It is evident that the non-contact ultrasonic measurement signals clearly matches with the contact based accelerometer measurement signals. The non-contact ultrasonic transducer and the contact based accelerometer detected the fundamental frequency of 65Hz along with its first harmonic at 130Hz. The generation of the tiny harmonic component may occur from the audio amplifier's output corresponding to the mechanical response of the diaphragm.

FIG. 6B illustrates plot of the FFT signal of dual frequency at (50 Hz and 60 Hz) excitation from ultrasound signals in comparison with accelerometer signals, in accordance with some embodiments of the present disclosure. The FFT of air transducer and accelerometer are illustrated when dual frequency (*f1*=50 and *f2*=60 Hz) is generated on the speaker. Detection of the fundamental frequencies (50 and 60 Hz), their 1st harmonics (100 and 120 Hz), the beat frequencies 110Hz (*f1+f2*) and 10Hz (*f1-f2*) are distinctly apparent from the air-transducer data. This is well supported by the accelerometer based ground-truth and tabulated in Table I where ($f_{ACL}$) represents accelerometer measurement and ($f_{US}$) represents ultrasonic measurement for the detected vibrations in conjunction with FIG.1.

Table I - Vibration detection for various frequencies

| Freq (*f*) generated | $f_{ACL}$ (Hz) | $f_{US}$ (Hz) | Error (%) |
|---|---|---|---|
| Single, 65 Hz | 65 | 65.86 | 1.32 |
| | 130 | 131.5 | 1.15 |

(continued)

| Freq (*f*) generated | $f_{ACL}$ (Hz) | $f_{US}$ (Hz) | Error (%) |
|---|---|---|---|
| | 10 | 10.1 | 1.00 |
| | 50 | 50.56 | 1.12 |
| | 60 | 60.51 | 0.85 |
| Double 50 and 60 Hz | 100 | 100.7 | 0.70 |
| | 110 | 110.8 | 0.72 |
| | 120 | 120.9 | 0.75 |

The impedance measurement technique not only picks-up the vibrational frequencies with very high accuracy (i.e., average error of 0.95±0.2 % only) but also reports the relative amplitudes.

FIG. 6C illustrates vibrations detected using spectrogram when swept linearly from 40 Hz to 54Hz using a piezoelectric ultrasonic transducer, in accordance with some embodiments of the present disclosure. The joint Time-Frequency Spectrogram for a frequency sweep measurement where the speaker is excited with a linear frequency sweep (starting from 40Hz and ending at 54Hz in 1Hz step with 1 sec duration/step). The change in frequency is clearly captured by the non-contact ultrasonic transducer as represented in the figure using the upper and lower lines in the spectrogram. Specifically, the lower line indicates the fundamental and the upper line indicates the corresponding first harmonics of the instantaneous excitation. The inset of the plot further depicts the frequency change in steps in 1 Hz, where each frequency step sustains for 1 sec.

The embodiments of present disclosure herein addresses the problem of detecting vibrations for monitoring faults to the machine being inspected. The embodiment, thus provides a method for detecting vibrations using non-contact ultrasound. The method uses a single non-contact ultrasonic air transducer is used for capturing the plurality of vibrational frequencies and their corresponding relative amplitudes in real time for detecting vibrations from a plurality of vibrating parts of the machine based on the change occurred in the impedance signal. The results depicts feasibility of non-contact vibration measurements with a single non-contact ultrasound air-transducer in place. The simplified design uses electrical impedance of a piezo-electric element which yields over 99.05±0.08 % accuracy in detecting spectral components when compared with a known technique of contact based accelerometer. Moreover, the system is capable of tracking varying frequencies in real-time along with capturing correct amplitude ratios for multi-component vibrations. The proposed simplified non-contact detection approach will be suitable for a wide range of hand-held based non-contact vibration measurement scenarios for preventive maintenance in industries or for any other applications.

The written description describes the subjectmatterhereinto enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extendedto such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can includeboth hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor (204) implemented method for detecting vibrations using non-contact ultrasonic transducer (104), wherein the method comprises:

   receiving, from a non-contact ultrasonic air transducer (104) by one or more hardware processors, a signal reflected from a plurality of vibrating parts (106) of a machine (108), wherein the signal is generated by the non-contact ultrasonic air transducer (104) placed at a distance from the machine (108);
   obtaining, by the one or more hardware processors (204), a plurality of vibrational frequencies generated from the plurality of vibrating parts (106), wherein each vibrational frequency among the plurality of vibrational frequencies corresponds to a vibrating part from the plurality of vibrating parts (106) of the machine (108);
   analyzing, by the one or more hardware processors (204), each vibrational frequency from the plurality of vibrational frequencies to determine an electrical impedance of a piezoelectric element of the non-contact ultrasonic air transducer, wherein the electrical impedance signal is determined based on a piezo resonance frequency excitation and an applied voltage to the non-contact ultrasonic air transducer; and
   detecting, by the one or more hardware processors (204), vibrations occurred in each vibrating part from the plurality of vibrating parts based on the determined electrical impedance.

2. The method as claimed in claim 1, wherein analyzing each vibrational frequency from the plurality of vibrational frequencies to determine the electrical impedance of the piezoelectric element of the non-contact ultrasonic air transducer (104) comprises:

   obtaining, the excitation voltage usingpiezo electric element of the non-contact ultrasonic transducer, connected to a known load resistance in series, at its resonance frequency with a sinusoidal voltage signal;
   measuring, the voltage drop across the known load resistance using lock-in detection principle; and
   measuring, the impedance magnitude of the piezoelectric element of the non-contact ultrasonic transducer using the excitation voltage, value of the known load resistance and the value of the voltage drop across the load resistance.

3. The method as claimed in claim 1, wherein the vibrations occurred in each vibrating part are detected based on the change occurred in the phase of electrical impedance.

4. The method as claimed in claim 1, wherein a single non-contact ultrasonic air transducer is used for capturing the plurality of vibrational frequencies and their corresponding relative amplitudes in real time for detecting vibrations from a plurality of vibrating parts of the machine based on the change occurred in the impedance signal.

5. The method as claimed in claim 1, wherein the measured impedance signal utilizes continuous sinusoidal excitation which enables narrow band filtering to increase signal to noise ratio.

6. A system (102), comprising:

a memory (202) storing instructions;
one or more communication interfaces (206); and
one or more hardware processors (204) coupled to the memory (202) via the one or more communication interfaces (206), wherein the one or more hardware processors (204) are configured by the instructionsto:

receive, from a non-contact ultrasonic air transducer (104), a signal reflected from a plurality of vibrating parts (106) of a machine (108), wherein the signal is generated by the non-contact ultrasonic air transducer (104) placed at a distance from the machine (108);
obtain, a plurality of vibrational frequencies generated from the plurality of vibrating parts (106), wherein each vibrational frequency among the plurality of vibrational frequencies corresponds to a vibrating part from the plurality of vibrating parts (106) of the machine (108);
analyze, each vibrational frequency from the plurality of vibrational frequencies to determine an electrical impedance of a piezoelectric element of the non-contact ultrasonic air transducer, wherein the electrical impedance signal is determined based on a piezo resonance frequency excitation and an applied voltage to the non-contact ultrasonic air transducer; and
detect, vibrations occurred in each vibrating part from the plurality of vibrating parts (106) based on the determined electrical impedance.

7. The system (102) as claimed in claim 6, wherein analyzing each vibrational frequency from the plurality of vibrational frequencies to determine the electrical impedance of the piezoelectric element of the non-contact ultrasonic air transducer comprises:

obtaining, the excitation voltage usingpiezo electric element of the non-contact ultrasonic transducer, connected to a known load resistance in series, at its resonance frequency with a sinusoidal voltage signal;
measuring, the voltage drop across the known load resistance using lock-in detection principle; and
measuring, the impedance magnitude of the piezoelectric element of the non-contact ultrasonic transducer using the excitation voltage, value of the known load resistance and the value of the voltage drop across the load resistance.

8. The system (102) as claimed in claim 6, wherein the vibrations occurred in each vibrating part are detected based on the change occurred in the phase of electrical impedance.

9. The system (102) as claimed in claim 6, wherein a single non-contact ultrasonic air transducer is used for capturing the plurality of vibrational frequencies and their corresponding relative amplitudes in real time for detecting vibrations from a plurality of vibrating parts of the machine based on the change occurred in the impedance signal.

10. The system (102) as claimed in claim 6, wherein the measured impedance signal utilizes continuous sinusoidal excitation which enables narrow band filtering to increase signal to noise ratio.

11. One or more non-transitory machine-readable information storage mediums comprising one or more instructions which when executed by one or more hardware processors perform actions comprising:

receiving, from a non-contact ultrasonic air transducer (104) by one or more hardware processors, a signal reflected from a plurality of vibrating parts (106) of a machine (108), wherein the signal is generated by the non-contact ultrasonic air transducer (104) placed at a distance from the machine (108);
obtaining, by the one or more hardware processors (204), a plurality of vibrational frequencies generated from the plurality of vibrating parts (106), wherein each vibrational frequency among the plurality of vibrational frequencies corresponds to a vibrating part from the plurality of vibrating parts (106) of the machine (108);
analyzing, by the one or more hardware processors (204), each vibrational frequency from the plurality of vibrational frequencies to determine an electrical impedance of a piezoelectric element of the non-contact ultrasonic air transducer, wherein the electrical impedance signal is determined based on a piezo resonance frequency excitation and an applied voltage to the non-contact ultrasonic air transducer; and
detecting, by the one or more hardware processors (204), vibrations occurred in each vibrating part from the plurality of vibrating parts based on the determined electrical impedance.

12. The one or more non-transitory machine-readable information storage mediums of claim 11, wherein analyzing each vibrational frequency from the plurality of vibrational frequencies to determine the electrical impedance of the piezoelectric element of the non-contact ultrasonic air transducer (104) comprises:

obtaining, the excitation voltage using piezo electric element of the non-contact ultrasonic transducer, connected to a known load resistance in series, at its resonance frequency with a sinusoidal voltage signal;
measuring, the voltage drop across the known load resistance using lock-in detection principle; and
measuring, the impedance magnitude of the piezoelectric element of the non-contact ultrasonic transducer using the excitation voltage, value of the known load resistance and the value of the voltage drop across the load resistance.

13. The one ormore non-transitory machine-readable information storage mediums of claim 11, wherein the vibrations occurred in each vibrating part are detected based on the change occurred in the phase of electrical impedance.

14. The one or more non-transitory machine-readable information storage mediums of claim 11, wherein a single non-contact ultrasonic air transducer is used for capturing the plurality of vibrational frequencies and their corresponding relative amplitudes in real time for detecting vibrations from a plurality of vibrating parts of the machine based on the change occurred in the impedance signal.

15. The one or more non-transitory machine-readable information storage mediums of claim 11, wherein the measured impedance signal utilizes continuous sinusoidal excitation which enables narrow band filtering to increase signal to noise ratio.

100

| System 102 |

signal →

| Non-contact ultrasonic transducer 104 |

signal

Machine 108

| Vibrating part of a machine 106 |

FIG. 1

**System 102**

**Hardware Processor(s) 204**

**I/O Interface(s) 206**

**Memory 202**

**Repository 216**

**FIG. 2**

300

receiving, from a non-contact ultrasonic air transducer by one or more hardware processors, a signal reflected from a plurality of vibrating parts of a machine, wherein the signal is generated by the non-contact ultrasonic air transducer placed at a distance from the machine

302

obtaining, a plurality of vibrational frequencies generated from the plurality of vibrating parts, wherein each vibrational frequency among the plurality of vibrational frequencies corresponds to a vibrating part from the plurality of vibrating parts of the machine

304

analyzing, each vibrational frequency from the plurality of vibrational frequencies to determine an electrical impedance of a piezoelectric element of the non-contact ultrasonic air transducer, wherein the electrical impedance signal is determined based on a piezo resonance frequency excitation and an applied voltage to the non-contact ultrasonic air transducer

306

detecting, vibrations occurred in each vibrating part from the plurality of vibrating parts based on the determined electrical impedance

308

FIG.3

**FIG.4A**

$Z_{AB}$

FIG.4B

FIG.4C

**FIG.4D**

**FIG.5A**

FIG.5B

FIG.5C

**FIG.6A**

FIG.6B

**FIG.6C**

Europäisches
Patentamt

European
Patent Office

Office européen
des brevets

# EUROPEAN SEARCH REPORT

Application Number

EP 20 19 8646

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PL 213 143 B1 (POLITECHNIKA WROCLAWSKA [PL] ET AL.) 31 January 2013 (2013-01-31) * page 2, line 43 - page 3, line 39 * * figures 1,2 * ----- | 1-15 | INV. G01H11/08 G01N29/24 |
| Y | JP H08 261915 A (OLYMPUS OPTICAL CO) 11 October 1996 (1996-10-11) * paragraph [0050] * ----- | 1-15 | |
| Y | US 2009/260422 A1 (SUGIURA MAKIKO [JP] ET AL) 22 October 2009 (2009-10-22) * paragraph [0130] - paragraph [0131] * ----- | 2,7,12 | |
| A | US 5 220 922 A (BARANY LASZLO P [US]) 22 June 1993 (1993-06-22) * figure 1 * ----- | 1,3,6,8, 11,13 | |

TECHNICAL FIELDS
SEARCHED     (IPC)

G01H
G01N
G01M
G01S

The present search report has been drawn up for all claims

| Place of search | Date of completion of the search | Examiner |
|---|---|---|
| The Hague | 10 March 2021 | Breccia, Luca |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  .......................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 20 19 8646

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2021

| Patent document cited in search report | | Publication date | Patent family member(s) | | Publication date |
|---|---|---|---|---|---|
| PL 213143 | B1 | 31-01-2013 | NONE | | |
| JP H08261915 | A | 11-10-1996 | JP 3686698 B2 | | 24-08-2005 |
| | | | JP H08261915 A | | 11-10-1996 |
| US 2009260422 | A1 | 22-10-2009 | DE 102009017507 A1 | | 05-11-2009 |
| | | | DE 102009061087 B3 | | 14-06-2012 |
| | | | US 2009260422 A1 | | 22-10-2009 |
| | | | US 2012174673 A1 | | 12-07-2012 |
| US 5220922 | A | 22-06-1993 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 201921043154